# EUROPÄISCHE PATENTSCHRIFT

(11) **EP 3 542 082 B1**
(45) Veröffentlichungstag und Bekanntmachung des Hinweises auf die Patenterteilung: **23.12.2020**
(21) Anmeldenummer: 17791575.8
(22) Anmeldetag: 25.10.2017
(51) Int. Cl.: F16D 55/2255, F16D 65/56

(54) **NACHSTELLVORRICHTUNG FÜR EINE SCHEIBENBREMSE**
ADJUSTING DEVICE FOR A DISC BRAKE
DISPOSITIF DE RATTRAPAGE D'USURE POUR FREIN À DISQUE

(30) Priorität: 19.11.2016 DE 102016013849
(43) Veröffentlichungstag der Anmeldung: 25.09.2019
(73) Patentinhaber: WABCO Europe BVBA, 1170 Brussels (BE)
(72) Erfinder: HENNING, Paul, 68723 Schwetzingen (DE)
(74) Vertreter: Copi, Joachim
(86) Internationale Anmeldenummer: PCT/EP2017/001247
(87) Internationale Veröffentlichungsnummer: WO 2018/091127

(56) Entgegenhaltungen:
- DE-A1-102014 017 438
- DE-B- 1 252 979
- GB-A- 1 355 960
- US-A- 4 321 986

## Beschreibung

Die Erfindung betrifft eine Nachstellvorrichtung für eine Scheibenbremse zur Nachstellung des Verschleißes bei Bremsbelägen. Insbesondere betrifft die Erfindung eine Nachstellvorrichtung zur Nachstellung des Verschleißes bei Bremsbelägen für Nutzfahrzeuge, wobei die Nachstellvorrichtung über eine drehbare Stellspindel der Scheibenbremse geschoben ist. Die Stellspindel weist ein Gewinde auf und ist in eine axialverschiebliche Einheit mit einer Gewindebohrung eingeschraubt.

Derartige Nachstellvorrichtungen eignen sich zum Nachstellen von Bremsbacken von Scheibenbremsen, da Scheibenbremsen im Allgemeinen einem Verschleiß unterliegen, der das Lüftspiel zwischen einem Bremsbelag und einer Bremsscheibe vergrößert. Unter dem Begriff des Lüftspiels der Scheibenbremse wird hier ein Spalt zwischen den Bremsbelägen und der Bremsscheibe im unbetätigten Zustand der Scheibenbremse verstanden.

Tritt daher ein Verschleiß von Bremsbelägen und/oder der Bremsscheibe mit einer daraus resultierenden Veränderung, d.h. Vergrößerung des Lüftspiels auf, so erfolgt ein selbsttätiges Nachstellen der Beläge mittels der Nachstellvorrichtung, beispielsweise durch eine Verstellbewegung von Druckstempeln.

Eine gattungsgemäße Nachstellvorrichtung für Nutzfahrzeuge ist beispielsweise aus der DE 19 7316 96 A1 bekannt. Dabei handelt es sich insbesondere um eine Verschleißnachstellvorrichtung mit einem elektromotorischen Nachsteller für eine pneumatisch betätigte Scheibenbremse, der die Stellspindel drehend nachstellt.

Aus der DE 10 2014 112 662 A1 ist weiterhin eine Verschleißnachstellvorrichtung für Scheibenbremsen bekannt, bei der zwischen dem Antriebsglied und dem Nachstellerabtriebsrad eine Übertragungseinheit mit einem einstellbaren Spiel angeordnet ist, welches einem Lüftspiel der zuzuordnenden Scheibenbremse entspricht. Die Nachstellvorrichtung ist antriebsseitig mit der Zuspannvorrichtung und abtriebsseitig mit einer Gewindestellmutter der Zuspannmechanik der Scheibenbremse gekoppelt. Beidseitig des Antriebsgliedes ist jeweils eine Wälzkörperanordnung angeordnet von denen eine als ein Axiallager und eine als eine Überlastkupplungseinrichtung ausgebildet ist. Das mit der Überlastkupplungseinrichtung gekoppelte Nachstellerabtriebsrad dient zur Kopplung mit der Gewindestellmutter der Zuspannmechanik. Die Vorspannkraft der Überlastkupplungseinrichtung wird mittels einer Vorspannfeder erreicht.

Aus der DE 10 2014 017 430 A1 geht ein VerschleißNachstellvorrichtung für eine Scheibenbremse hervor, bei dem die Nachstellvorrichtung eine Schlingfeder aufweist, die zumindest bei einem Verdrehen in einer der ersten Drehrichtung entgegengesetzten zweiten Drehrichtung mit dem Außengewinde der Stellspindel kämmt und das Nachstellgetriebe bezüglich der Stellspindel verschraubt. Die Verschleiß-Nachstellvorrichtung wird nicht ortsfest am Bremssattel oder ortsfest an dem verschiebbaren Druckstück gehalten. Die Halterung/ Lagerung erfolgt in der DE 10 2014 017 430 A1 direkt am bzw. auf dem Gewindebereich der Stellspindel. Zum Abstützen der Schlingfeder ortsfest am Bremssattel oder am Druckstück wäre ein zusätzliches Bauteil notwendig, was aus Kostengründen nicht erwünscht ist. Zudem kann die Nachstellvorrichtung nicht als Einheit über die Stellspindel geschoben werden, wodurch die Montage aufwendig ist.

Auch die EP 3 051 170 A1 zeigt eine Nachstellvorrichtung für eine Scheibenbremse mit einer rechteckig geformten Schlingfeder, wobei die Schlingfeder um einen äußeren Kolben angeordnet ist und ein Ende der Schlingfeder mit einem Antriebsring verbunden ist, wodurch die Schlingfeder als Einweg/-Freilaufkupplung wirkt.

Bei der DE 10 2014 101 341 A1 ist die Übertragungseinrichtung einer Nachstellvorrichtung als wendelförmige Schlingfeder ausgebildet, bei der sich die Nachstellvorrichtung längs eines ersten Wendelabschnitts radial gegenüber dem Antriebselement und längs eines zweiten Wendelabschnitts radial gegenüber dem Nachstellelement abstützt. Die eine Radialabstützung befindet sich an der Innenseite der Schlingfeder und die zweite Radialabstützung befindet sich an der Außenseite der Schlingfeder.

Sowohl bei der EP 3 051 170 A1, als auch bei der DE 10 2014 101 341 A1 weist die Nachstellvorrichtung nur eine Vorspannung in radialer Richtung, nicht aber in einer radialen und tangentialen Richtung auf. Die tangentiale Vorspannung ist zum Öffnen der Schlingfeder notwendig, um die Sperrbewegung der Schlingfeder für einen Bremsbelagwechsel ohne ein zusätzliches Bauteil aufzuheben.

Die GB 1 355 960 A offenbart eine Nachstellvorrichtung zum Nachstellen des Verschleißes bei Bremsbelägen für Scheibenbremsen. Die Nachstellvorrichtung ist über einen Klemmring in einem zuspannseitigen Zylinder fixiert.

Die DE 12 52 979 B zeigt ebenfalls eine Nachstelleinrichtung zum Nachstellen von Bremsbelägen einer Scheibenbremse. Die Nachstelleinrichtung ist über einen Sicherungsring in einem Druckstück der Scheibenbremse fixiert. Das Druckstück ist wiederum axialverschieblich in einem Bremssattelgehäuse der Scheibenbremse angeordnet.

Der Erfindung liegt die Aufgabe zugrunde, eine Nachstellvorrichtung für eine Scheibenbremse derart zu verbessern, dass die oben beschriebenen Nachteile hinsichtlich der Vorspannung in tangentialer und radialer Richtung vermieden werden, wodurch die Kosten und Montage verringert werden.

Erfindungsgemäß wird die gestellte Aufgabe durch eine Nachstellvorrichtung gelöst, die einen Sicherungsring aufweist, wobei die Nachstellvorrichtung axialverschieblich und durch den Sicherungsring kraftschlüssig und/oder formschlüssig fixiert ist.

Axiale Kräfte, die durch einen Mitnahmestift aufgrund seiner Kinematik während der Abrollbewegung eines Hebels eingeleitet werden, werden an der Stirnfläche einer Außenhülse zu einer axialverschieblichen Einheit und über den Sicherungsring, angeordnet in eine Nut bzw. Hinter- schnitt der axialverschieblichen Einheit, abgestützt.

Radiale Kräfte werden über die Führung des Außendurchmessers der Außenhülse in der Gewindebohrung der axialverschieblichen Einheit abgestützt.

Erfindungsgemäß ist die Nachstellrichtung weiterhin dazu ausgebildet, Radialkraft direkt über einen Nutring der Nachstellvorrichtung auf die Außenhülse in eine axialverschiebliche Einheit einzuleiten. Die Radialkraft wird durch die Bewegung des Mitnahmestifts auf den Nutring erzeugt. Damit wird keine Querkraft auf eine Stellspindel übertragen, was zu exponentiell ansteigenden Reibmomenten führt. Die Auslegung des Momentenhaushaltes der Nachstellvorrichtung wird damit in der Festigkeit, der Materialauswahl, sowie der Lebensdauer positiv beeinflusst. Idealerweise liegt die Abstützung der Radialkräfte des Mitnahmestifts über den Nutring und der Außen- hülse in einer Ebene, sodass keine Kippmomente erzeugt bzw. die Kippmomente so gering wie möglich gehalten werden.

In einer weiteren vorteilhaften Ausführungsform ist eine Schlingfeder dazu ausgebildet, sich an der axialverschieblichen Einrichtung abzustützen. Die Abstützung an der axialverschieblichen Einrichtung erfolgt in Umfangsrichtung mittels eines zweiten Endes der Schlingfeder, das während der Rückstellbewegung der Nachstellschraube, die angetrieben wird, an einer relativ zur Nachstellvorrichtung ortsfesten Einrichtung anschlägt und die Sperrwirkung der Schlingfeder aufhebt.

In einer weiteren vorteilhaften Ausgestaltung weist die Nachstellvorrichtung eine Torsionsfeder auf. Die Torsionsfeder ist mit einem Ende an dem Nutring angeordnet. Über das zweite Ende ist die Torsionsfeder an der radial äußeren Seite einer Verschlusskappe angeordnet. Die Torsionsfeder ist dazu ausgebildet, eine Drehbewegung des Hebels der Zuspanneinrichtung an die Verschlusskappe zu übertragen. Die Torsionsfeder ist so stark vorgespannt, dass im Betätigungshub die gesamte Nachstellvorrichtung durch den Hebel verdreht wird. Dabei muss das Bremsmoment durch einen vorgeschalteten Bremsring mit einer Tellerfeder kleiner sein, als das Vorspannmoment der Torsionsfeder.

Die Außenhülse der Nachstellvorrichtung ist in einer weiteren vorteilhaften Ausgestaltung dazu ausgebildet, den Nutring, die Torsionsfeder, eine Antriebshülse, die Schlingfeder, die Verschlusskappe und den Sicherungsring aufzunehmen.

Zudem schließt die Antriebshülse den Pfad des Torsionsmomentes von einem zum anderen Ende der Torsionsfeder, damit die Vorspannung der Torsionsfeder über den Anschlag des Nutrings an die Außenhülse erfolgt. Ein Torsionsmoment ist ein Moment, bei dem ein mit dem Moment belasteter Körper, d.h. die Antriebshülse, verdreht wird. Die Antriebshülse hat zudem die Aufgabe, Radialkräfte in die axialverschiebliche Einrichtung einzuleiten und die Nachstellvorrichtung in der axialverschieblichen Einrichtung axial zu führen.

Darüber hinaus bietet die Außenhülle eine Schutzfunktion, z.B. gegen Schmutz und/oder Beschädigungen, für die oben beschriebenen Teile der Nachstellvorrichtung.

Im Falle einer langen konstanten Bremsung, bei der die Nachstellung von der Bremsbetätigung in eine Position des Überhubs der Torsionsfeder gewesen ist, ist die in der Torsionsfeder gespeicherte Energie zum Nachstellen der Stellspindel im Lösehub nutzbar. Als Überhub bezeichnet man den Differenzbetrag zwischen Leerhub und konstruktiven Lüftspiel. Anders ausgedrückt, bei jeder Betätigung der Bremse wird eine Nachstellbewegung ausgeführt, die dem Differenzbetrag Leerhub und kosntruktiven Lüftspiel proportional ist. Dieser Differenzbetrag wird als Überhub bezeichnet. Der Leerhub dient zur Überwindung des Lüftspiels. Als konstruktives Lüftspiel bezeichnet man den Kolbenhub, der während des Leerhubes ausgeführt wird.

In einer weiteren bevorzugten Ausführungsform der Erfindung weist die Nachstellvorrichtung eine Schlingfeder auf, die mit einem ersten Ende an der Verschlusskappe der Nachstellvorrichtung als Festsitz, angeordnet ist. Dabei weist die Schlingfeder im ungespannten Zustand, d.h. vor der Montage einen geringeren Innendurchmesser auf, als der Durchmesser der Verschlusskappe, an dem die Schlingfeder mit ihrem ersten Ende angeordnet ist.

Da das erste Ende der Schlingfeder auf einem inneren zylindrischen Ansatz der Verschlusskappe befestigt ist, bzw. als Festsitz ausgebildet ist, kann die Drehbewegung, ausgehend von dem Hebel mit einem Stifteingriff einer Zuspanneinrichtung der Scheibenbremse von der Verschlusskappe auf die Schlingfeder übertragen werden.

Nach einer weiteren vorteilhaften Ausgestaltung ist die Verschlusskappe der Nachstellvorrichtung materialschlüssig und/oder kraftschlüssig und/oder formschlüssig mit der Außenhülle verbunden. Die Verbindung der Verschlusskappe mit der Außenhülle ist in allen Freiheitsgraden starr. Das heißt, dass die Verschlusskappe in allen Bewegungsmöglichkeiten nicht beweglich bzw. verdrehbar und/oder elastisch an der Außenhülle angeordnet ist.

Die Verschlusskappe wird während der Montage für die Einstellung der Vorspannung der Schlingfeder in definierter Position zur Außenhülse positioniert. Das heißt, die Verschlusskappe wird mit der Außenhülse je nach Gestaltung über eine vordefinierte geometrische Position oder über eine Momenten-gesteuerte Einstellung fixiert.

Nach einer weiteren vorteilhaften Ausgestaltung ist die Schlingfeder der Nachstellvorrichtung mit dem zweiten Ende als Lossitz an der Antriebshülse der Nachstellvorrichtung befestigt.

Die Überdeckung, d.h. der Abstand der Schlingfeder in dem Bereich, an dem die Schlingfeder angeordnet ist, ist bei dem Lossitz geringer als bei dem Festsitz. Anders ausgedrückt, der Durchmesser der Antriebshülse ist geringer, als der Durchmesser der Verschlusskappe, an dem die Schlingfeder mit ihrem ersten Ende angeordnet ist. Dadurch wird im Bereich, an dem die Schlingfeder auf der Antriebshülse angeordnet ist ein geringeres Moment der Drehbewegung übertragen, als an der Verschlusskappe, an dem die Schlingfeder mit ihrem ersten Ende angeordnet ist.

Damit überträgt die Schlingfeder an ihrem zweiten Ende ein geringeres Moment, als am ersten Ende der Schlingfeder. Somit ist gewährleistet, dass im Rückhub der Nachstellbewegung eine Rückwärtsbewegung der Schlingfeder auf der Antriebshülse erfolgt.

Darüber hinaus ist in einer weiteren vorteilhaften Ausgestaltung im Inneren der Antriebshülse mindestens ein Führungselement ausgebildet. Das Führungselement ist mit einer Führungsnut der Stellspindel im Eingriff. Das Führungselement ist in axialer Richtung der Antriebshülse angeordnet und weist die Länge der Antriebshülse auf. Sowohl die Länge, die Breite, als auch die Form der Führungsnut kann variieren. Insbesondere ist die Führungsnut derart ausgestaltet, dass die Kraft in Umfangsrichtung so spielarm, bzw. so verlustfrei wie möglich übertragen wird und die axiale Verschiebbarkeit der Antriebshülse gegeben ist.

Die Nachstellvorrichtung ist in einer weiteren vorteilhaften Ausführungsform mit der axialverschieblichen Einheit über einen axialen Formschluss verbunden. Die formschlüssige Verbindung entsteht durch die Anordnung der Nachstellvorrichtung in der axialverschieblichen Einheit. Die Nachstellvorrichtung greift über den Sicherungsring der Nachstellvorrichtung in die Nut der axialverschiebliche Einheit. Dadurch kann sich die Nachstellvorrichtung in der axialen Richtung nicht von der axialveschieblichen Einheit lösen.

Durch die Vorspannkraft, z.B. Druckkraft, des Sicherungsrings stemmt sich der Sicherungsring radial auswärts gegen zumindest eine Fläche der Nut der axialverschieblichen Einrichtung und verhindert damit ein Verschieben der Nachstellvorrichtung. Anders ausgedrückt, die Nachstellvorrichutng ist kraftschlüssig mit der axialverschieblichen Einheit verbunden. Auch denkbar ist die axialkraftfreie Auslegung des Sicherungsrings. Dabei muss das Axialspiel so klein wie möglich ausgeführt werden.

Zudem zeigt eine weitere vorteilhafte Ausgestaltung, dass die Nachstellvorrichtung als Einheit, umfassend einen Sprengring, die Außenhülse, den Nutring, die Antriebshülse, die Torsionsfeder, die Schlingfeder und die Verschlusskappe in die axialverschiebliche Einheit montierbar ist.

Eine gerichtete Montage der Stellspindel, bei der die Gewindeflanken der Nachstellschraube in Umfangsrichtung zur axialverschieblichen Einrichtung und der Nachstellvorrichtung ausgerichtet werden müssen, ist hierbei nicht notwendig.

In einer weiteren vorteilhaften Ausführungsform ist die Nachstellvorrichtung dazu ausgebildet, die tangentiale Vorspannkraft nur für die Rückstellung der Stellspindel freizugeben.

Die tangentiale Vorspannkraft hebt die Sperrwirkung beim Zurückdrehen der Nachstellschraube in der Schlingfeder für einen Bremsbelagwechsel auf. Dazu dient ein zweites Ende der Schlingfeder, das seitlich radial entgegengesetzt der Richtung der Antriebshülse absteht und sich an der axialverschieblichen Einrichtung abstützt. Dabei entsteht die tangentiale Vorspannkraft, durch die die Sperrwirkung der Schlingfeder aufgehoben wird.

In einer weiteren bevorzugten Ausführungsform ist die Antriebshülse der Nachstellvorrichtung durch einen Formschluss an der Stellspindel angeordnet und dazu eingerichtet, die Drehbewegung auf die Stellspindel zu übertragen.

Ferner ist in einer weiteren vorteilhaften Ausgestaltung der Nutring dazu ausgebildet die Drehbewegung auf die am Nutring angeordnete Torsionsfeder zu übertragen. Hierzu weist der Nutring an der radialen Außenseite eine taschenartige Ausformung auf, in der das eine Ende des Nutrings eingehängt ist.

Nachfolgend werden ausgewählte Ausführungsbeispiele der Erfindung anhand der beigefügten Zeichnungen erläutert.

Es zeigt:
Fig. 1 eine Explosionsansicht der Nachstellvorrichtung mit Teilen einer Zuspanneinheit,
Fig. 2 einen Querschnitt der Baugruppe Zuspanneinheit mit der Unterbaugruppe Nachstellvorrichtung im Längsschnitt,
Fig. 3 eine perspektivische Ansicht der Baugruppe Zuspanneinheit mit der Unterbaugruppe Nachstellvorrichtung,
Fig. 4 eine Seitenansicht der Nachstellvorrichtung,
Fig. 5 eine Seiten-/Frontalansicht der Nachstellvorrichtung,
Fig. 6 eine Anordnung der Schlingfeder auf der Verschlusskappe der Nachstellvorrichtung,
Fig. 7 eine Anordnung der Schlingfeder auf der Antriebshülse der Nachstellvorrichung,
Fig. 8 eine perspektivische Ansicht der Antriebshülse,
Fig. 9 eine Abstützung der Schlingfeder an der axialverschieblichen Einheit in einer teilweisen geschnittenen Ansicht.

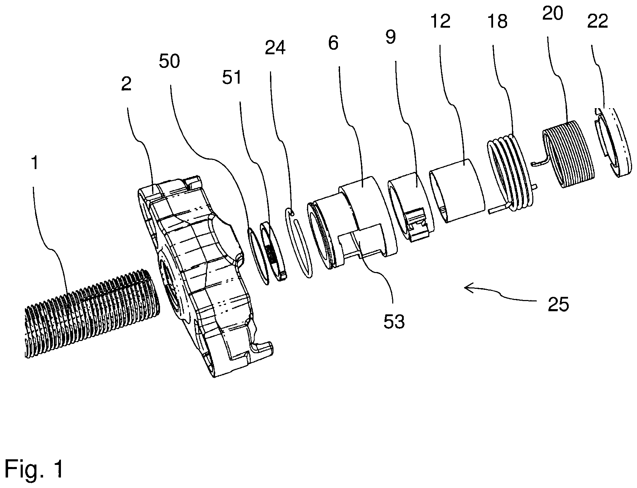

Die Fig. 1 zeigt den Aufbau einer Nachstellvorrichtung 25, sowie die Anordnung und Lage der Nachstellvorrichtung 25 zu einer axialverschieblichen Einheit 2, einer Tellerfeder 50, einem Bremsring 51 und einer Stellspindel 1, die Bestandteile einer Zuspanneinheit sind.

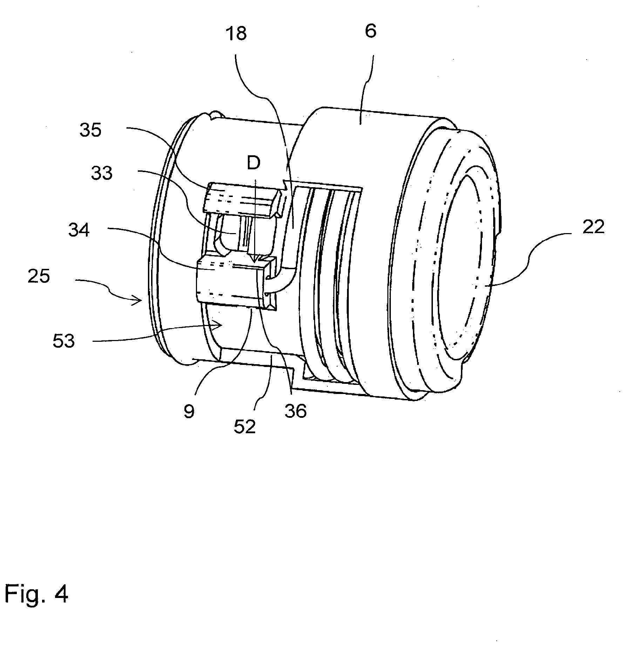

Wie bereits aus dem Stand der Technik bekannt ist, erzeugt der Bremsring 51 ein konstantes Bremsmoment/Haltemoment auf die Stellspindel 1, um eine Verdrehung der Stellspindel 1 im Rückhub und eine durch Vibrationen, z.B. durch eine unebene Fahrbahn, selbst angeregte Drehbewegung D, wie in Fig. 4 gezeigt, der Stellspindel 1 zu verhindern, das zu einer Lüftspielverstellung führen kann. Dabei ist das Bremsmoment größer als das Freilaufmoment einer Schlingfeder 20.

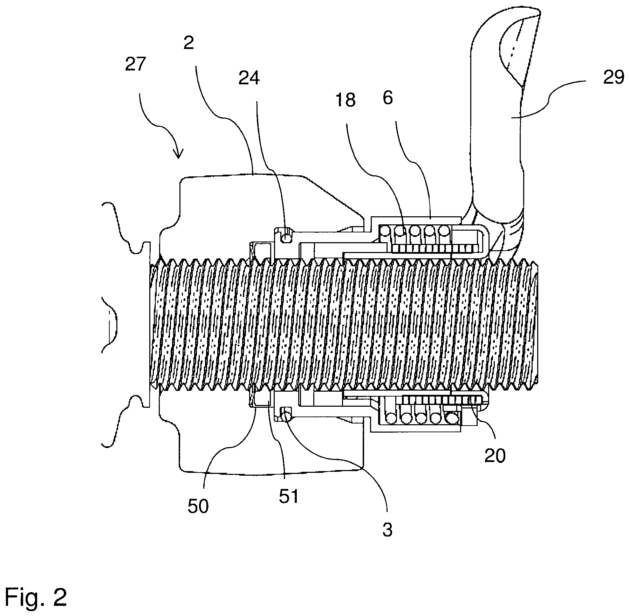

Die Nachstellvorrichtung 25 setzt sich aus einem Sicherungsring 24 bzw. einem Sprengring 24, einer Außenhülse 6, einem Nutring 9, einer Antriebshülse 12, einer Torsionsfeder 18, der Schlingfeder 20 und einer Verschlusskappe 22 zusammen. Die Nachstellvorrichtung 25 ist als Einheit in die axialverschiebliche Einheit 2, bzw. in das Druckstück 2 über die Stellspindel 1 geschoben. Der Sicherungsring 24 fixiert die Nachstellvorrichtung 25 durch einen Formschluss in eine in der axialverschieblichen Einheit 2 bearbeitete Nut 3 (Fig. 2). Die axiale Verbindung zwischen der Nachstellvorrichtung 25 und der axialverschieblichen Einheit 2 kann bzw. muss so ausgelegt werden, dass nur eine Montage, aber keine Demontage möglich ist. Es soll ausdrücklich darauf hingewiesen werden, dass nicht vorgesehen ist, die Nachstellvorrichtung 25 während der Lebensdauer der Scheibenbremse zu ersetzen.

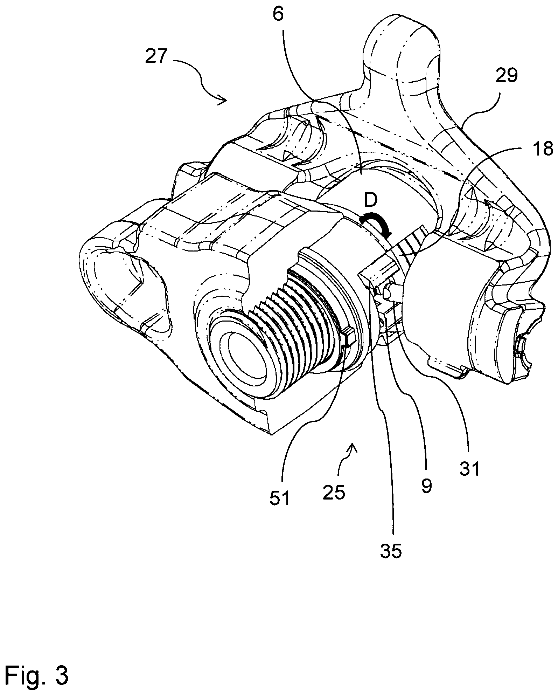

Der Querschnitt aus Fig. 2 und die perspektivische Ansicht gemäß Fig. 3 mit der Baugruppe Zuspanneinheit 27 verdeutlichen die Anordnung der Nachstellvorrichtung 25 in der Baugruppe Zuspanneinheit 27. Die Nachstellvorrichtung 25 ist eine Unterbaugruppe der Zuspanneinheit 27 und bewirkt eine Nachstellung der Stellspindel 1. Die Nachstellung der Stellspindel 1 erfolgt durch die Drehbewegung D eines Hebels 29, der mit einem Mitnahmestift 31 verbunden ist, wobei der Mitnahmestift 31 in den Nutring 9 eingreift. Im ruhenden Zustand, das heißt die Nachstellvorrichtung 25 ist ohne Krafteinwirkung durch den Hebel 29 der Zuspanneinrichtung 27, ist die Nachstellvorrichtung 25 dabei durch die Torsionsfeder 18 mit einem Drehmoment vorgespannt. Damit wird der Nutring 9 gegen die Außenhülse 6 der Nachstellvorrichtung 25 gedrückt.

Sofern ein nachzustellendes Lüftspiel zwischen Bremsbelag und Bremsscheibe vorhanden ist, also noch keine Bremswirkung entsteht, wird durch die Antriebsbewegung des Hebels 29 die Nachstellvorrichtung 25 im Vorhub gleichermaßen verdreht, da die Torsionsfeder 18 ein höheres Vorspannmoment aufbringt, als das durch die Tellerfeder 50 und dem Bremsring 51 auf die Stellspindel 1 erzeugte Vorspannmoment. Somit wird die Stellspindel 1 in Drehbewegung D versetzt und eine Nachstellung des Bremsbelags über die Stellspindel 1 erreicht.

Wenn das nachzustellende Lüftspiel zwischen Bremsbelag und Bremsscheibe überwunden, bzw. nicht vorhanden ist, d.h. die Nachstellbewegung ist durch eine existierende Axialkraft auf der Stellspindel 1 während der Bremsbetätigung an der Stellspindel 1 blockiert, wird die Drehbewegung D des Hebels 29 bei der Bremsbetätigung weiterhin auf den Nutring 9 eingeleitet.

Da die Drehbewegung D der Stellspindel 1 durch die Axialkraft verhindert wird, kann die Antriebshülse 12, die Schlingfeder 20, sowie die Verschlusskappe 22 und die Außenhülse 6 keine Drehbewegung D ausführen. Somit wird die Drehbewegung D von dem Nutring 9 auf die Torsionsfeder 18 übertragen, in dem das Moment in der Torsionsfeder 18 ansteigt. Der Nutring 9 hebt von einem zweiten Ansatz bzw. Anschlag 35 gegen die Außenhülse 6 ab. Durch einen Freigang 52 (Fig. 4) kann der Nutring 9 sich frei in der Außenhülse 6 während des Überhubes drehen.

Die Fig. 4 zeigt den Freigang 52 und die Aussparung der Antriebshülse 53 im Detail.

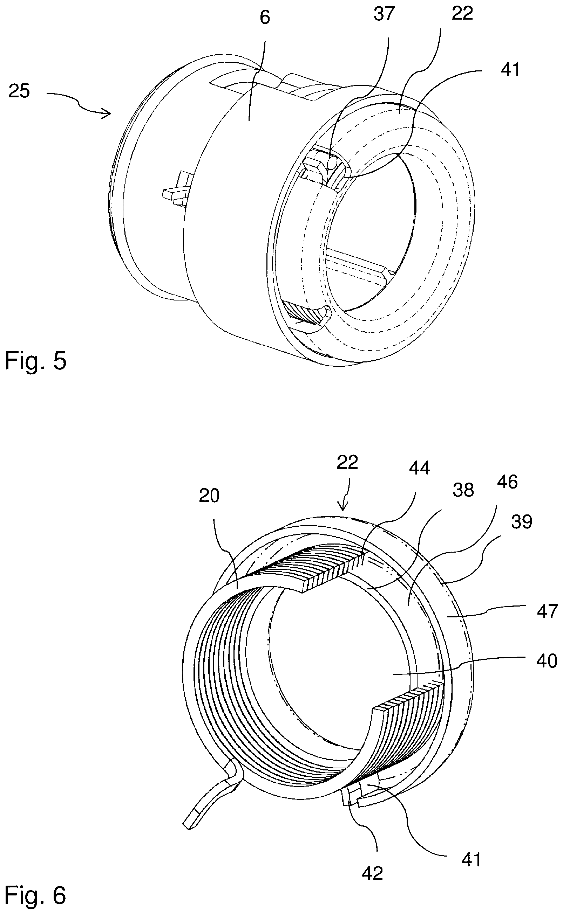

Die Fig. 4 und die Fig. 5 zeigen die Nachstellvorrichung 25 als zusammengesetzte Bauteilgruppe. In Fig. 4 ist die Anbindung der Torsionsfeder 18 an dem Nutring 9 sichtbar. Der Nutring 9 weist eine Öffnung 33 auf, in dem der mit dem Hebel 29 verbundenen Mitnahmestift 31 eingreift. Der Nutring 9 weist zudem radial seitlich der Öffnung 33 einen Ansatz 34 auf, der zur Aufnahme eines ersten Endes 36 der Torsionsfeder 18 ausgestaltet ist.

Die Außenhülse 6 ist nach unten in Richtung eines ersten Ansatzes 34 des Nutrings 9 ausgespart, um die gesamte Drehbewegung des Nutrings 9 durch den Hebel 29 zuzulassen.

Der Nutring 9 wird durch die Vorspannkraft der Torsionsfeder 18 an der in Richtung der Anlagefläche der Aussparung der Antriebshülse weisende Rückseite des zweiten Ansatzes 35 gegen die Außenhülse 6 gedrückt. Somit ist die Nachstelleinrichtung 25 in sich vorgespannt.

Der Nutring 9 überträgt die Drehbewegung D des Hebels 29 auf die im Nutring 9 eingehängte Torsionsfeder 18. Die Torsionsfeder 18 überträgt die Drehbewegung D weiter über das in der Verschlusskappe 22 eingehängte zweite Ende 37 der Torsionsfeder 18 (Fig. 5).

Die Verschlusskappe 22 weist gemäß Fig. 5 und Fig. 6 eine zylindrische Form, bestehend aus einer radial inneren Wand 38 und einer radial äußeren Wand 39 auf. Mittig der Verschlusskappe 22 ist eine Öffnung 40 zur Aufnahme der Stellspindel 1 vorgesehen. Der Umfang der radial inneren Wand 38 ist der Durchmesser der Öffnung 40 der Verschlusskappe 22. Darüber hinaus weist die Verschlusskappe 22 an der radial äußeren Wand 39 eine Nut 41 mit einem als Nase ausgebildeten und an der radial äußeren Wand 39 nach radial außen abstehenden angeformten Ansatz 42 auf. Der Ansatz 42 und die Nut 41 sind dazu ausgebildet das zweite Ende 37 der Torsionsfeder 18 aufzunehmen. Das zweite Ende 37 der Torsionsfeder 18 ist daher in die Verschlusskappe 22 eingehängt, wobei sich das zweite Ende der Torsionsfeder 37 an dem Ansatz 42 der Verschlusskappe 22 in Umfangsrichtung abstützt.

Eine Anbindung der Verschlusskappe 22 an die Außenhülle 6 der Nachstellvorrichtung 25 erfolgt über eine in die Richtung der Außenhülse weisende Fläche 47 der äußeren Wand 39 der Versschlusskappe 22. Dabei ist die Fläche der radial äußeren Wand 47 an einer inneren Wand der Außenhülse 6 angeordnet (Fig. 2). Anders ausgedrückt, ist die Verschlusskappe 22 materialschlüssig oder formschlüssig oder kraftschlüssig mit der Außenhülse 6 starr in allen Freiheitsgraden verbunden.

Die Schlingfeder 20 stützt sich mit ihrem ersten Ende 44 an der in Richtung der radial äußeren Wand 39 der Verschlusskappe 22 aufweisenden Fläche 46 der radial inneren Wand 38 der Verschlusskappe 22 ab und weist in dem Bereich der radial inneren Wand 38 einen Festsitz auf. Die Drehbewegung D wird somit von der Verschlusskappe 22 auf die Schlingfeder 20 übertragen.

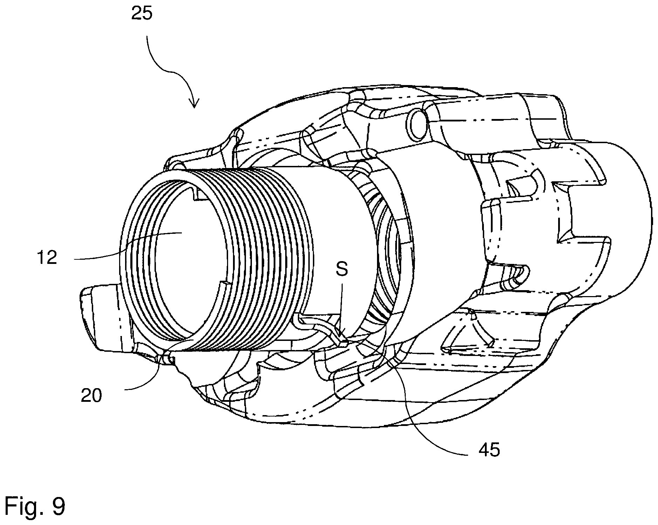

Aus Fig. 9 geht hervor, dass die Schlingfeder 20 der Nachstellvorrichtung 25 mit einem zweiten Ende 45 auf der Antriebshülse 12 angeordnet ist und eine Tangentialkraft auf die Schlingfeder 20 beim Rückstellen der Nachstellvorrichtung 25 einleitet um die Wirkung des Sperrmomentes aufzuheben, da bei einem Rückstellvorgang der Antrieb durch die Stellspindel 1 in eine Sperrichtung S auf die Schlingfeder 20 wirkt. Wie Figur 9 verdeutlicht, ist die Sperrichtung S bei einem Rückstellvorgang der Schlingfeder 20 im Uhrzeigersinn. Die Stellspindel 1 wird daher im Uhrzeigersinn in Umfangsrichtung verdreht.

In dem Bereich, in dem die Schlingfeder 20 auf der Antriebshülse 12 angeordnet ist, weist die Schlingfeder 20 einen Lossitz auf.

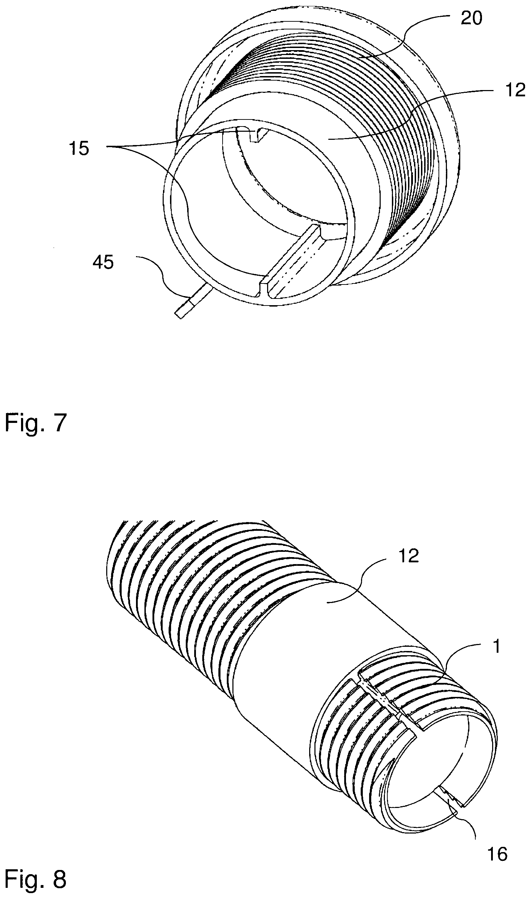

Wie in Fig. 6 und Fig.7 zu sehen ist, weißt die Schlingfeder 20 eine rechteckige Form auf, was vorteilhaft bezüglich der Lebensdauer und der Kraftübertragung gegenüber einem runden Querschnitt bei gleichen Anforderungen ist.

Durch einen Formschluss überträgt die Antriebshülse 12 die Drehbewegung D des Hebels 29 der Zuspanneinheit 27 auf die Stellspindel 1. Dazu weist die Antriebshülse 12 zwei Führungselemente 15 auf, die mit je einer in der Stellspindel 1 aufweisenden Führungsnut 16 formschlüssig verbunden sind, was Fig. 7, sowie Fig. 8 deutlich zeigen. Die Führungsnut 16 ist in ihrer Länge so ausgebildet, dass die Führungsnut 16 nicht aus dem Eingriff mit den Führungselementen 15 der Antriebshülse 12 kommt, wenn die Stellspindel 1 in Richtung der Bremsscheibe ihre maximale Auslegung erreicht hat.

Fig. 9 verdeutlicht die Ausgestaltung der Schlingfeder 20 zur Rückstellung der Stellspindel 1 für einen Bremsbelagwechsel. Die Stellspindel 1 muss für einen Bremsbelagwechsel zurückgedreht werden. Dadurch wird die Antriebshülse 12 in Sperrichtung S der Schlingfeder 20 gedreht. Um die Sperrwirkung der Schlingfeder 20 aufzuheben, muss die Schlingfeder 20 geöffnet werden.

Dazu dient das zweite Ende der Schlingfeder 45, das seitlich radial entgegengesetzt der Richtung der Antriebshülse 12 absteht, sich an der axialverschieblichen Einrichtung 2 abstützt und dabei eine Tangentialkraft entsteht, wodurch die Sperrwirkung der Schlingfeder 20 aufgehoben wird.

### Bezugszeichenliste (Teil der Beschreibung)

- 1: Stellspindel
- 2: axialverschiebliche Einheit
- 3: Nut axialverschiebliche Einheit
- 6: Außenhülse
- 9: Nutring
- 12: Antriebshülse
- 15: Führungselement
- 16: Führungsnut
- 18: Torsionsfeder
- 20: Schlingfeder
- 22: Verschlusskappe
- 24: Sicherungsring
- 25: Nachstellvorrichtung
- 27: Zuspanneinheit
- 29: Hebel
- 31: Mitnahmestift
- 33: Öffnung des Nutrings 9
- 34: erster Ansatz des Nutrings 9
- 35: zweiter Ansatz des Nutring 9
- 36: erstes Ende der Torsionsfeder 18
- 37: zweites Ende der Torsionsfeder 18
- 38: radial innere Wand der Verschlusskappe 22
- 39: radial äußere Wand der Verschlusskappe 22
- 40: Öffnung der Verschlusskappe 22
- 41: Nut der Verschlusskappe 22
- 42: zylindrischer Ansatz der Verschlusskappe 22
- 44: erstes Ende der Schlingfeder 20
- 45: zweites Ende der Schlingfeder 20
- 46: Fläche der radial inneren Wand 38 der Versschlusskappe 22
- 47: Fläche der radial äußeren Wand 39 der Verschlusskappe 22
- 50: Tellerfeder
- 51: Bremsring
- 52: Freigang
- 53: Aussparung der Antriebshülse 12
- D: Drehbewegung
- S: Sperrichtung

## Patentansprüche

1. Nachstellvorrichtung zur Nachstellung des Verschleißes bei Bremsbelägen, insbesondere für Nutzfahrzeuge, wobei die Nachstellvorrichtung (25) über eine drehbare Stellspindel (1) einer Scheibenbremse geschoben ist, die Stellspindel (1) ein Gewinde aufweist und in eine Gewindebohrung in eine axialverschiebliche Einheit (2) eingeschraubt ist, wobei die Nachstellvorrichtung (25) axialverschieblich ist, **dadurch gekennzeichnet, dass** die Nachstellvorrichtung in eine in der axialverschieblichen Einheit (2) bearbeitete Nut (3) durch einen Sicherungsring (24) kraftschlüssig und/oder formschlüssig fixiert ist, wobei die Nachstellvorrichtung (25) eine Radialkraft direkt über einen Nutring (9) der Nachstellvorrichtung (25) auf eine Außenhülse (6) in die axialverschiebliche Einheit (2) einleitet.

2. Nachstellvorrichtung nach Anspruch 1, **dadurch gekennzeichnet, dass** die Nachstellvorrichtung (25) eine Schlingfeder (20) aufweist, welche sich an der axialverschieblichen Einheit (2) abstützt.

3. Nachstellvorrichtung nach Anspruch 1 oder 2, **dadurch gekennzeichnet, dass** die Nachstellvorrichtung (25) mit einem ersten Ende (36) einer Torsionsfeder (18) an dem Nutring (9) angeordnet ist und mit einem zweiten Ende (37) der Torsionsfeder (18) an einer Verschlusskappe (22) angeordnet ist, wobei die Torsionsfeder (18) eine Drehbewegung D an die Verschlusskappe (22) überträgt.

4. Nachstellvorrichtung nach Anspruch 1, **dadurch gekennzeichnet, dass** die Außenhülse (6) so ausgebildet ist, dass sie den Nutring (9), die Torsionsfeder (18), die Schlingfeder (20), die Verschlusskappe (22), den Sicherungsring (24) und eine Antriebshülse (12) aufnimmt.

5. Nachstellvorrichtung nach Anspruch 2 und 3, **dadurch gekennzeichnet, dass** ein erstes Ende (44) der Schlingfeder (20) an der Ver- schlusskappe (2) der Nachstellvorrichtung (25) angeordnet ist.

6. Nachstellvorrichtung nach Anspruch 3, **dadurch gekennzeichnet, dass** die Verschlusskappe (22) materialschlüssig und/oder kraftschlüssig und/oder formschlüssig an der Außenhülse (6) angeordnet ist.

7. Nachstellvorrichtung nach Anspruch 2 und 4, **dadurch gekennzeichnet, dass** die Schlingfeder (20) ein zweiten Ende (45) aufweist, wobei das zweite Ende (45) der Schlingfeder (20) an der Antriebshülse (12) angeordnet ist.

8. Nachstellvorrichtung nach Anspruch 7, **dadurch gekennzeichnet, dass** im Inneren der Antriebshülse (12) mindestens ein Führungselement (15) ausgebildet ist, das mit einer Führungsnut (16) der Stellspindel (1) im Eingriff steht.

9. Nachstellvorrichtung nach einem der vorangegangenen Ansprüche, **dadurch gekennzeichnet, dass** die Nachstellvorrichtung (25) mit der axialverschieblichen Einheit (2) über einen axialen Formschluss verbunden ist.

10. Nachstellvorrichtung nach Anspruch 2, 3 und 4, **dadurch gekennzeichnet, dass** die Nachstellvorrichtung (25) als Einheit, umfassend den Sicherungsring (24), die Außenhülse (6), den Nutring (9), die Antriebshülse (12), die Torsionsfeder (18), die Schlingfeder (20) und die Verschlusskappe (22) in die axialverschiebliche Einheit (2) montierbar ist.

## Claims

1. Adjusting apparatus for the adjustment of the wear in the case of brake linings, in particular for utility vehicles, the adjusting apparatus (25) being pushed via a rotatable adjusting spindle (1) of a disc brake, the adjusting spindle (1) having a thread and being screwed into a threaded bore in an axially displaceable unit (2), the adjusting apparatus (25) being axially displaceable, **characterized in that** the adjusting apparatus is fixed in a non-positive and/or positively locking manner by way of a securing ring (24) in a groove (3) which is machined in the axially displaceable unit (2), the adjusting apparatus (25) introducing a radial force directly via a grooved ring (9) of the adjusting apparatus (25) to an outer sleeve (6) in the axially displaceable unit (2).

2. Adjusting apparatus according to Claim 1, **characterized in that** the adjusting apparatus (25) has a wrap spring (20) which is supported on the axially displaceable unit (2).

3. Adjusting apparatus according to Claim 1 or 2, **characterized in that** the adjusting apparatus (25) is arranged with a first end (36) of a torsion spring (18) on the grooved ring (9) and with a second end (37) of the torsion spring (18) on a closure cap (22), the torsion spring (18) transmitting a rotational movement D to the closure cap (22).

4. Adjusting apparatus according to Claim 1, **characterized in that** the outer sleeve (6) is configured in such a way that it receives the grooved ring (9), the torsion spring (18), the wrap spring (20), the closure cap (22), the securing ring (24) and a drive sleeve (12).

5. Adjusting apparatus according to Claims 2 and 3, **characterized in that** a first end (44) of the wrap spring (20) is arranged on the closure cap (2) of the adjusting apparatus (25).

6. Adjusting apparatus according to Claim 3, **characterized in that** the closure cap (22) is arranged on the outer sleeve (6) in an integrally joined and/or non-positive and/or positively locking manner.

7. Adjusting apparatus according to Claims 2 and 4, **characterized in that** the wrap spring (20) has a second end (45), the second end (45) of the wrap spring (20) being arranged on the drive sleeve (12).

8. Adjusting apparatus according to Claim 7, **characterized in that** at least one guide element (15) which is in engagement with a guide groove (16) of the adjusting spindle (1) is configured in the interior of the drive sleeve (12).

9. Adjusting apparatus according to one of the preceding claims, **characterized in that** the adjusting apparatus (25) is connected to the axially displaceable unit (2) via an axial positively locking connection.

10. Adjusting apparatus according to Claims 2, 3 and 4, **characterized in that** the adjusting apparatus (25) can be mounted in the axially displaceable unit (2) as one unit, comprising the securing ring (24), the outer sleeve (6), the grooved ring (9), the drive sleeve (12), the torsion spring (18), the wrap spring (20) and the closure cap (22).

## Revendications

1. Dispositif de rattrapage de jeu destiné à rattraper l'usure dans des garnitures de frein, en particulier pour des véhicules utilitaires, dans lequel le dispositif de rattrapage de jeu (25) est emboîté par l'intermédiaire d'une broche de réglage rotative (1) d'un frein à disque, la broche de réglage (1) présente un filet et est vissée dans un trou taraudé dans une unité coulissante axialement (2), le dispositif de rattrapage de jeu (25) étant coulissant axialement, **caractérisé en ce que** le dispositif de rattrapage de jeu est fixé par adhérence et/ou par complémentarité de forme dans une rainure (3) usinée dans l'unité coulissante axialement (2) par un circlip (24), le dispositif de rattrapage de jeu (25) introduisant une force radiale directement par l'intermédiaire d'un joint à gorge (9) du dispositif de rattrapage de jeu (25) sur une douille extérieure (6) dans l'unité coulissante axialement (2).

2. Dispositif de rattrapage de jeu selon la revendication 1, **caractérisé en ce que** le dispositif de rattrapage de jeu (25) présente un ressort enroulé (20) qui prend appui sur l'unité coulissante axialement (2).

3. Dispositif de rattrapage de jeu selon la revendication 1 ou 2, **caractérisé en ce que** le dispositif de rattrapage de jeu (25) est disposé avec une première extrémité (36) d'une barre de torsion (18) sur le joint à gorge (9) et est disposé avec une deuxième extrémité (37) de la barre de torsion (18) sur un bouchon de fermeture (22), la barre de torsion (18) transmettant un mouvement de rotation D au bouchon de fermeture (22).

4. Dispositif de rattrapage de jeu selon la revendication 1, **caractérisé en ce que** la douille extérieure (6) est réalisée de façon à loger le joint à gorge (9), la barre de torsion (18), le ressort enroulé (20), le bouchon de fermeture (22), le circlip (24) et une douille d'entraînement (12).

5. Dispositif de rattrapage de jeu selon les revendications 2 et 3, **caractérisé en ce qu'**une première extrémité (44) du ressort enroulé (20) est disposée sur le bouchon de fermeture (2) du dispositif de rattrapage de jeu (25).

6. Dispositif de rattrapage de jeu selon la revendication 3, **caractérisé en ce que** le bouchon de fermeture (22) est disposé sur la douille extérieure (6) par liaison de matière et/ou par adhérence et/ou par complémentarité de forme.

7. Dispositif de rattrapage de jeu selon les revendications 2 et 4, **caractérisé en ce que** le ressort enroulé (20) présente une deuxième extrémité (45), la deuxième extrémité (45) du ressort enroulé (20) étant disposée sur la douille d'entraînement (12).

8. Dispositif de rattrapage de jeu selon la revendication 7, **caractérisé en ce qu'**à l'intérieur de la douille d'entraînement (12), au moins un élément de guidage (15) est réalisé qui est en prise avec une rainure de guidage (16) de la broche de réglage (1).

9. Dispositif de rattrapage de jeu selon l'une quelconque des revendications précédentes, **caractérisé en ce que** le dispositif de rattrapage de jeu (25) est relié à l'unité coulissante axialement (2) par complémentarité de forme axiale.

10. Dispositif de rattrapage de jeu selon les revendications 2, 3 et 4, **caractérisé en ce que** le dispositif de rattrapage de jeu (25) peut être installé dans l'unité coulissante axialement (2) sous la forme d'une unité comprenant le circlip (24), la douille extérieure (6), le joint à gorge (9), la douille d'entraînement (12), la barre de torsion (18), le ressort enroulé (20) et le bouchon de fermeture (22).
